# EUROPEAN PATENT APPLICATION

(11) **EP 2 201 842 A2**
(43) Date of publication of application: **30.06.2010**
(21) Application number: 09180205.8
(22) Date of filing: 21.12.2009
(51) Int. Cl.: A21D 2/16, A21D 2/18, A21D 8/04, A21D 10/00, A23D 7/00

(54) **Bread improver**

(30) Priority: 24.12.2008 NL 1036366
(71) Applicant: Zeelandia H. J. Doeleman B.V., 4301 AA Zierikzee (NL)
(72) Inventor: Van der Klooster, Hubertus Willem, 4322 NA Scharendijke (NL); De Dreu, Marinus Adriaan, 4441 SE Ovenzande (NL); Pollemans, Johannes Gabriël Adrianus, 4306 EA NIieuwerkerk (NL)
(74) Representative: van Kooij, Adriaan

(57) **Abstract**

The present invention relates to bread improvement agents and to methods for provision thereof. Further, the present invention relates to the use of the present bread improvement agents for providing bread. Specifically, the present invention relates to Bread improvement agent in the form of a water-in-oil-in-water emulsion comprising: a) 10 to 40% (v/v) of a water-in-oil emulsion comprising: 80 to 90% (v/v) oil comprising a fraction of fat with a melting point above room temperature; 1 to 10% (v/v) of one or more enzymes in an aqueous solution or suspension; and one or more first emulsifiers; b) supplemented with a water phase up to 100% (v/v), wherein said water phase comprises water or a sugar syrup wherein the particle size of the water-in-oil emulsion in the water phase is less than 20 urn and wherein the particle size of one or more enzymes in an aqueous solution or suspension in the oil is less than 10 µm, preferably less than 5 µm, more preferably less than 2 turn.

## Description

The present invention relates to bread improvement agents and to methods for provision thereof. Further, the present invention relates to the use of the present bread improvement agents for providing bread.

In the field of bread preparation, especially in industrial bread preparation, bread dough is usually prepared by mixing the bulk ingredients flour, water, (liquid) yeast and bread improvement agent. A bread improvement agent may comprise ingredients as soya flour, permeate, sugars and fats with added micro-ingredients such as enzymes, or enzyme preparations, emulsifiers, vitamin C and L-cystein. Typically, a dosing amount of bread improvement agent is between 1 to 3% calculated by weight of the flour. Following mixing and kneading of the flour, water, yeast and bread improvement agent, the dough formed is further processed into bread.

Since micro-ingredients, such as enzymes or enzyme preparations, are constituents of the bread improvement agent, a precise and safe dosage of these ingredients should be realized.

As a result of developments in enzyme technology, it became feasible to prepare bread with only a combination of enzymes or enzyme preparations as bread improvement agent. In this case, a typical dosage is 100 mg per kg flour. The dosage of such relatively small amounts of bread improvement agent is practically not feasible in an (industrial) bakery. Precise dosage instruments are not available and dust from (concentrated) enzyme preparations is hazardous when inhaled.

Considering the above, it is an object of the present invention, amongst other objects, to provide a dosage, or formulation, form for bread dough preparation which solves, at least partially, if not all, the aforementioned problems relating to the dosage of bread improvement agents with a high amount of enzymes or enzyme preparations.

Further, considering the fact that enzymes, or enzyme preparations for bread (dough) preparation during an extended period of time should remain stable, such as several months between formulation and the eventual use, it is a further object of the present invention, amongst other objects, to provide a solution for the dosage problem by providing stable and novel enzyme or enzyme preparation dosage or formulation forms.

The above objects, amongst other objects, of the present invention are met by providing a dosage or formulation form for enzymes or enzyme preparations for bread preparation as defined in the appended claim 1.

Specifically, the above objects, amongst other objects, of the present invention are met, according to one aspect, by providing a bread improvement agent in liquid form which bread improvement agent is in the form of a water-in-oil-in-water emulsion comprising:
a) 10 to 40% (v/v) of a water-in-oil emulsion comprising:
   - 80 to 90% (v/v) oil comprising a fraction of fat with a melting point above room temperature;
   - 1 to 10% (v/v) of one or more enzymes in an aqueous solution or suspension; and
   - one or more first emulsifiers;
b) supplemented with a water phase up to 100% (v/v), wherein said water phase comprises water or a sugar syrup
wherein the particle size of the water-in-oil phase in the water phase is less than 20 µm and wherein the particle size of the one or more enzymes in an aqueous solution or suspension in the oil is less than 10 µm, preferably less than 5 µm, more preferably less than 2 µm.

The present inventors surprisingly found that the water-in-oil-in-water emulsion according to the present invention is stable for extended periods of time, such as during several months, such as at least 3 months.

This stability is not only provided by the observation that the enzymes in the present emulsion retain their activity, but also by the observation that the present emulsion of enzymes, emulsifiers, oil and water remain an emulsion, i.e., without, for example, the occurrence of phase separation during extended periods of time, such as several months.

By using the present liquid dosage form of a bread improvement agent, the aforementioned problems associated with dust forming are inherently, as compared to a powder formulation, minimized or absent.

Further, the present liquid dosage form of a bread improvement agent, for example in comparison with a solid or powder form, is easier to dose and especially without the use of a dosing apparatus.

Within the context of the present invention, the present water-in-oil emulsion may be replaced by an oil phase comprising the present enzymes. Accordingly, the present invention relates, according to a second aspect, to a bread improvement agent in the form of an oil-in-water emulsion comprising:
a) 10 to 40% (v/v) of an oil phase comprising:
   - 80 to 99% (v/v) oil comprising a fraction of fat with a melting point above room temperature;
   - one or more enzymes; and
b) supplemented with a water phase up to 100% (v/v), wherein said water phase comprises water or a sugar syrup and one or more emulsifiers;
wherein the particle size of the oil phase in the water phase is less than 20 µm, preferably less than 10 µm, more preferably less than 5 µm, most preferably less than 2 µm.

In general, a suitable dosing amount of the present bread improvement agent will approximately be 1% or 2% or less, such as 0.9; 0.8; 0.7; 0.6; 0.5; 0.4; 0.3; 0.2; or 0.1% in relation to the mass of the flour. Practically, this translates into that approximately 1.5 or 3 kg or less, such as 1.4; 1.3; 1.2; or 1.1 kg, etc. of the present liquid bread improvement agent is to be added to 150 kg flour being a typical charge size in an industrial bakery.

The one or more emulsifiers according to the present invention are emulsifiers which are generally used in the field of (industrial) bread preparation.

Generally, the amount emulsifier in the present bread improvement agent is approximately 1 to 10 mg per m² interface, such as 2; 3; 4; 5; 6; 7; 8; or 9 mg per m² interface, preferably approximately 5 to 7, and more preferably 5 mg/m²_{.}

Preferably, the first one or more emulsifiers according to the present invention are chosen from the group consisting of monoglycerides, diglycerides, polyglycerol polyricinoleat, and combinations thereof.

Preferably, the second one or more emulsifiers according to the present invention are chosen from the group consisting of monoglycerides, diglycerides, diacetyl tartrate acid esters, stearoyllactylate, and combinations thereof.

The one or more enzymes according to the present invention are commonly used enzymes in the field of (industrial) bread preparation.

Preferably, the enzymes according to the present invention are chosen from the group consisting of lipases, glucose oxidases, polysaccharide degrading enzymes, and combinations thereof. These enzymes are common in the field of (industrial) bread preparation.

Further, these one or more enzymes are used in amounts, or activities, common in the field of (industrial) bread preparation.

According to a preferred embodiment, the present bread improvement agent comprises one or more viscosity enhancers, such as, preferably, viscosity enhancers chosen from the group consisting of xanthan gum, guar gum, syrup, glucose syrup, hydrocolloids, and combinations thereof. These viscosity enhancers further contribute to the advantageous characteristics of the present invention, such as an easier dosing. Further, they contribute to an improved microbiological stability by lowering the water activity.

According to a further preferred embodiment, the bread improvement agent according to the present invention comprises 15 to 25% v/v oil or a water-in-oil phase, such as 16; 17; 18; 19; 20; 21; 22; 23; 24% v/v, preferably 19 to 21% v/v oil, more preferably 20% v/v.

Considering the aforementioned advantageous characteristics of the present liquid bread improvement agent, the invention relates, according to another aspect, to methods for providing bread improvement agents comprising:
a) providing one or more emulsifiers according to the present invention in a oil according to the present invention;
b) adding one or more enzymes in an aqueous solvent or suspension according to the present invention to (a) and emulsifying the mixture obtained under high pressure and/or using an ultraturrax until an average particle size of the aqueous solvent or suspension in the oil of less than 10 µm, preferably less than 5 µm, more preferably less than 2 µm for providing a water-in-oil emulsion;
c) adding a water phase according to the present invention to (b) and emulsifying the provided mixture under high pressure and/or using an ultraturrax until an average particle size of the water-in-oil emulsion in the water phase of less than 20 µm for providing a water-in-oil-in-water emulsion.

According to yet another aspect, the present invention also relates to methods for providing bread comprising:
a) combining the present bread improvement agent with ingredients such as soya flour, permeate and sugars; and
b) baking a bread.

According to yet another aspect, the present invention also relates to the use of the present bread improvement agent for preparing bread.

The present invention will be further illustrated using the below examples of preferred embodiments. It should be noted that these examples are not be considered as limitative for the scope of protection of the present invention which is solely determined by the appended claims.

### Examples

### Example 1

A liquid bread improvement agent according to the present invention was prepared using the following ingredients, in the indicated amounts, for providing a white traditional tin baked bread.

| *Ingredients* | |
|---|---|
| Ingredient | amount |
| Glucose syrup | 800 g |
| Emulsifier | 5 g |
| Oil | 200 g |
| Enzyme | 10 g |

### Preparation

The enzyme was dispersed in the oil. The emulsifier was dissolved in water. The oil phase including the enzyme was added to the water phase including the emulsifier and divided in little droplets using an Ultraturrax or homogenisator.

### Stability

The above described bread improvement agent was stored in a dry environment at room temperature for 3 months. No reduction of enzyme activity or phase separation of the oil-in-water emulsion was observed after 3 months.

### Example 2

A liquid bread improvement agent according to the present invention was prepared using the following ingredients, in the indicated amounts, for providing a white baguette.

| *Ingredients* | |
|---|---|
| Ingredient | amount |
| Water | 800 g |
| Emulsifier | 5 g |
| Vitamin C | 15 g |
| Oil | 200 g |
| Enzyme | 10 g |

### Preparation

The enzyme was dispersed in the oil. The emulsifier and vitamin C were dissolved in the sugar syrup. The oil phase including the enzyme was added to the sugar syrup including emulsifier and vitamin C and distributed in little droplets using an Ultraturrax or homogenisator.

### Stability

The above described bread improvement agent was stored in a dry environment at room temperature for 3 months. No reduction of enzyme activity or phase separation of the oil-in-water emulsion was observed after 3 months.

### Example 3

| *Ingredients* | |
|---|---|
| Ingredient | amount |
| Sugar syrup | 800 g |
| Emulsifier | 5 g |
| Oil | 200 g |
| Enzyme in water | 10 g |

### Preparation

The enzyme was emulsified in the oil with emulsifier to a particles size of less than 2 µm using an Ultraturrax. Subsequently, into the water-in-oil emulsion obtained was added the sugar syrup and a second emulsifier and the resulting mixture was emulsified to a particle size of 15 µm using an Ultaturrax.

### Stability

The above described bread improvement agent was stored in a dry environment at room temperature for 3 months. No reduction of enzyme activity or phase separation of the water-in-oil-in-water emulsion was observed after 3 months.

### Example 4

A liquid bread improvement agent according to the present invention was prepared using the following ingredients, in the indicated quantities, for providing a white baguette.

| *Ingredients* | |
|---|---|
| Ingredient | amount |
| Water | 800 g |
| Emulsifier | 5 g |
| Vitamin C | 15 g |
| Oil | 200 g |
| Enzyme | 10 g |

### Preparation

The enzyme on a water base was emulsified in the oil using an Ultraturrax or homogenisator and the emulsifier polyclycerol polyricinoleate (PGPR). Emulsifier and vitamin C were dissolved in the water. The oil phase including the enzyme and PGPR was added to the water including the emulsifier and vitamin C and divided in little droplets using an Ultraturrax or homogenisator.

### Stability

The above described bread improvement agent was stored in a dry environment at room temperature for 3 months. No reduction of enzyme activity or phase separation of the water-in-oil-in-water emulsion was observed after 3 months.

## Claims

**1.** Bread improvement agent in the form of a water-in-oil-in-water emulsion comprising:
a) 10 to 40% (v/v) of a water-in-oil emulsion comprising:
- 80 to 90% (v/v) oil comprising a fraction of fat with a melting point above room temperature;
- 1 to 10% (v/v) of one or more enzymes in an aqueous solution or suspension; and
- one or more first emulsifiers;
b) supplemented with a water phase up to 100% (v/v), wherein said water phase comprises water or a sugar syrup,
wherein the particle size of the water-in-oil emulsion in the water phase is less than 20 µm and wherein the particle size of one or more enzymes in an aqueous solution or suspension in the oil is less than 10 µm, preferably less than 5 µm, more preferably less than 2 µm.

**2.** Bread improvement agent in the form of an oil-in-water emulsion comprising:
a) 10 to 40% (v/v) of an oil phase comprising:
- 80 to 99% (v/v) oil comprising a fraction of fat with a melting point above room temperature;
- one or more enzymes; and
b) supplemented with a water phase up to 100% (v/v), wherein said water phase comprises water or a sugar syrup and one or more emulsifiers;
wherein the particle size of the oil phase in the water phase is less than 20 µm, preferably less than 10 µm, more preferably less than 5 µm, most preferably less than 2 µm.

**3.** Bread improvement agent according to claim 1 or claim 2, wherein the water phase comprises:
- 95 to 99% (v/v) water or a sugar syrup;
- 0 to 3% (v/v) milk protein;
- 0 to 3% (v/v) viscosity enhancer; and
- one or more second emulsifiers.

**4.** Bread improvement agent according to claim 3, wherein the water phase further comprises vitamin C and/or L-cystein.

**5.** Bread improvement agent according to any of the claims 1 to 4, wherein the first one or more emulsifiers is chosen from the group consisting of monoglycerides, diglycerides, polyglycerol polyricinoleat, and combinations thereof.

**6.** Bread improvement agent according to any of the claims 3 to 5, wherein the second one or more emulsifier is chosen from the group consisting of monoglycerides, diglycerides, diacetyl tartrate acid esters, stearoyllactylate, and combinations thereof.

**7.** Bread improvement agent according to any of the claims 3 to 6, wherein the viscosity enhancer is chosen from the group consisting of xanthan gum, guar gum, syrup, glucose syrup, hydrocolloids, and combinations thereof.

**8.** Bread improvement agent according to any of the claims 1 to 7, wherein the one or more enzymes are chosen from the group consisting of lipases, glucose oxidases, poly saccharide degrading enzymes, and combinations thereof.

**9.** Bread improvement agent according to any of the claims 1 to 8, wherein the oil or the water-in-oil phase is from 15 to 25% (v/v), preferably 19 to 21% (v/v).

**10.** Method for providing a bread improvement agent comprising:
a) providing one or more first emulsifiers according to any of the claims 1 to 9 in an oil according to any of the claims 1 to 9;
b) adding one or more enzymes in an aqueous solvent or suspension according to any of the claims 1 to 9 to (a) and emulsifying the mixture provided under high pressure and/or by using an ultraturrax until an average particle size of the aqueous solvent or suspension in the oil of less than 10 µm, preferably less than 5 µm, more preferably less than 2 µm for providing a water-in-oil emulsion;
c) adding a water phase according to any of the claims 1 to 9 to (b) and emulsifying the mixture provided under high pressure and/or by using an ultraturrax until an average particle size of the water-in-oil emulsion in the water phase of less than 20 µm for providing a water-in-oil-in-water emulsion.

**11.** Bread improvement agent obtainable by a method according to claim 10.

**12.** Method for providing bread comprising:
a) combining a bread improvement agent according to any of the claims 1 to 9, or claim 11, with bulk ingredients for bread; and
b) baking a bread.

**14.** Use of the bread improvement agent according to any of the claims 1 to 9, or claim 11 for preparing of bread.
